# EUROPÄISCHE PATENTSCHRIFT

(11) **EP 0 629 786 B1**
(45) Veröffentlichungstag und Bekanntmachung des Hinweises auf die Patenterteilung: **12.03.1997**
(21) Anmeldenummer: 94108654.8
(22) Anmeldetag: 07.06.1994
(51) Int. Cl.: F16B 13/12

(54) **Metalldübel zur Verankerung in dünnen Wandplatten**
Metallic dowel for anchoring in thin wall panels
Cheville en métal d'ancrage pour panneaux muraux minces

(30) Priorität: 18.06.1993 DE 4320163
(43) Veröffentlichungstag der Anmeldung: 21.12.1994
(73) Patentinhaber: A. Raymond GmbH & Co. KG, D-79539 Lörrach (DE)
(72) Erfinder: Mutz, Bernd, D-79650 Schopfheim (DE); Hullmann, Klaus, D-79540 Lörrach (DE); Daler, Helmo, D-79539 Lörrach (DE)
(74) Vertreter: Kirchgaesser, Johannes, Dipl.-Ing.

(56) Entgegenhaltungen:
- DE-C- 116 844
- DE-C- 259 039
- US-A- 2 596 952
- US-A- 4 500 238

## Beschreibung

Die Erfindung bezieht sich auf einen Metalldübel der im Oberbegriff des Anspruchs 1 angegebenen Art, welcher zur Verankerung in dünnen Wandplatten, insbesondere in Gipskartonplatten bestimmt ist.

Der Metalldübel wird aus dünnem Stahlblech hergestellt und besteht im wesentlichen aus zwei flach aneinandergepreßten Spreizschenkeln, welche an einem Ende spitz auslaufend ausgebildet und am entgegengesetzten Ende, dem Kopfende, fest miteinander verbunden sind. Dieses Kopfende ist ferner mit einem Gewindebereich zum Eindrehen von Blech- oder Holzschrauben versehen. Dem Gewindebereich ist in den Spreizschenkeln eine Aussparung nachgeordnet, wobei die dem Gewindebereich gegenüberliegenden Kanten der Aussparung zum sicheren Einführen der Schraubenspitze trichterförmig ausgeformt sind.

Aus EP-B- 0 274 816 ist ein derartiger Metalldübel bekannt, bei welchem die Spreizschenkel über eine mit einem Gewindegang versehene Kopfplatte einteilig miteinander verbunden sind und im rechten Winkel von dieser abstehen. Dieser Metalldübel wird mittels eines Hammers mit den Schenkelspitzen vorweg in die Gipskartonplatte getrieben, bis die Kopfplatte auf der Plattenoberfläche aufliegt. Sodann wird die Schraube in den Gewindegang eingedreht, wobei die Spitze durch den trichterförmig ausgeformten Randbereich am Ende der Aussparung zwischen die Spreizschenkel geführt wird und diese soweit auseinandergedrückt, daß sie auf der Rückseite der Wandplatte verankert sind.

Damit die flach aufeinanderliegenden Schenkel beim Eintreiben in die dünne Wandplatte zusammenbleiben, ist aus der Metallfläche des einen Schenkels ein kleiner Lappen oder Steg herausgestanzt und in die Metallfläche des anderen Schenkels so eingedrückt, daß sich eine vorübergehende Verbindung zwischen den beiden Schenkeln ergibt. Diese reicht aus, um die Schenkel während des Eintreibens in die dünne Wandplatte zusammenzuhalten. Sobald jedoch die Blechschraube zwischen den Schenkeln eingedreht wird, wird der Lappen oder Steg aus der gegenüberliegenden Aussparung herausgerissen und die Schenkel können sich im weiteren Verlauf des Eindrehens spreizen, um die gewünschte Verankerung herbeizuführen.

Bei diesem Metalldübel wird es als Nachteil empfunden, daß die aufeinandergefaltete Kopfplatte mit etwa der dreifacher Blechdicke auf der Wandplatte vorsteht und demzufolge beim Eindrehen von Wandhaken sichtbar bleibt. Außerdem funktioniert die eingestanzte Lappenverbindung zwischen den Klemmschenkeln nur bei relativ kurzer Schenkellänge, so daß diese Dübel nur bei relativ dünnen Gipskartonplatten mit Erfolg eingesetzt werden können. Bei dickeren oder auch aufgedoppelten Platten hingegen, wo man längere Spreizschenkel benötigt, besteht leicht die Gefahr, daß die Schenkelspitzen trotz der eingestanzten Lappenverbindung sich bereits beim Eintreiben auseinanderbewegen. Dabei können aus der Gipskartonplatte Gipsbrocken herausbrechen, so daß der Verankerungsbereich nicht mehr die zur Anlage der Dübelschenkel erforderliche Festigkeit besitzt.

Aufgabe der Erfindung ist es, den vorbeschriebenen Metalldübel so zu gestalten, daß ein Überstehen des Kopfendes über die Wandplattenoberfläche vermieden wird und die Schenkelspitzen auch bei größeren Schenkellängen während des Eintreibens in die Wandplatte absolut zuverlässig zusammengehalten werden. Auch soll eine bessere Schraubenführung beim Eintritt zwischen die Spreizschenkel erreicht werden.

Diese Aufgabe wird nach der im Anspruch 1 angegebenen Erfindung im Prinzip dadurch gelöst, daß die Schenkelspitzen durch einen abreißbaren, dünnen Steg einstückig miteinander verbunden sind und der Gewindebereich durch aus dem Schenkelblech herausgestanzte, in die Gewinderillen der einzudrehenden Schraube eingreifende Haltestege gebildet wird.

Damit ändert sich gleichzeitig die Lage der Spreizschenkel bei der Ausformung in der Blechplatine gegenüber dem angeführten Stand der Technik. Während nämlich dort der Kopfbereich mit dem Gewinde in der Mitte liegt und die Schenkelspitzen nach außen weisen, sind beim erfindungsgemäßen Metalldübel die Spreizschenkel mit ihren Spitzen zur Mitte gerichtet und dort durch einen dünnen Steg miteinander verbunden; der Kopfbereich mit den ausgestanzten und ausgeformten Haltestegen für das Schraubengewinde befindet sich dagegen an den beiden freien Schenkelenden und wird erst nach dem Zusammenklappen der beiden Schenkel unlösbar miteinander verbunden.

Durch die Ausformung der Haltestege aus dem Schenkelblech wird die einzudrehende Schraube in zwei Gewindegängen sicher geführt und abgestützt, so daß ein schräges Austreten der Schraubenspitze, wie es beim genannten Stand der Technik bereits festgestellt wurde, bei dem erfindungsgemäßen Metalldübel völlig ausgeschlossen ist.

Die in den Unteransprüchen angegebenen Merkmale dienen ebenfalls der Verbesserung des Metalldübels im Sinne der Aufgabenstellung. So weisen die Merkmale des Anspruchs 2 einen einfachen und zugleich kostengünstigen Weg zur Herstellung der Kopfendenverbindung, während die Ansprüche 3 und 4 sich mit der zweckmäßigen Ausgestaltung der aus US-A- 4 500 238 bekannten Versteifungsrippen befassen, um ein sicheres Eintreiben der Spreizschenkel zu erreichen.

In der Zeichnung ist ein bevorzugtes Ausführungsbeispiel der Erfindung dargestellt und soll nachfolgend näher beschrieben werden. Es zeigt
- Fig. 1: den Metalldübel in Seitenansicht,
- Fig. 2: den Metalldübel in Draufsicht mit Blick auf den Gewindebereich,
- Fig. 3: den Metalldübel nach dem Eintreiben in eine Wandplatte,
- Fig. 4: den gleichen Metalldübel im Schnitt nach Linie IV - IV in Figur 3 mit bis an den Einführungstrichter herangedrehter Schraube,
- Fig. 5: den gleichen Metalldübel mit voll zwischen die Spreizschenkel eingedrehter Schraube und
- Fig. 6: eine ausgestanzte Blechplatine zur Herstellung des Metalldübels.

Der in den Figuren dargestellte Metalldübel besteht aus zwei flach aneinandergepreßten Spreizschenkeln 1 und 2 aus dünnem Stahlblech, welche zum Eintreiben in einer Wandplatte 13 an ihrem einen Ende spitz auslaufend ausgebildet und durch einen dünnen Steg 3 abreißbar miteinander verbunden sind. Am entgegengesetzten Kopfende sind die Spreizschenkel 1 und 2 in noch näher zu beschreibender Weise fest miteinander verbunden und mit einem Gewindebereich 4 versehen, dessen Achse "a" zwischen die Spreizschenkel 1 und 2 gerichtet ist. Dieser Gewindebereich 4 ist aus je zwei, aus dem Schenkelblech herausgestanzten und halbrund geformten Haltestegen 5 und 6 gebildet, welche in Breite und Steigung der Gewindeform der einzudrehenden Schraube 14 derart angepaßt sind, daß sie in die Gewinderillen eingreifen.

An den Gewindebereich 4 schließt sich eine Aussparung 9 an, wobei die Kanten 10 am Ende der Aussparung 9 halbkreisförmig aufgedrückt sind und das nachfolgende Blech wie ein Trichter ausgeformt ist, damit die Spitze 15 der Schraube 14 beim Eindrehen sicher zwischen die beiden Metallschenkel 1 und 2 geführt ist.

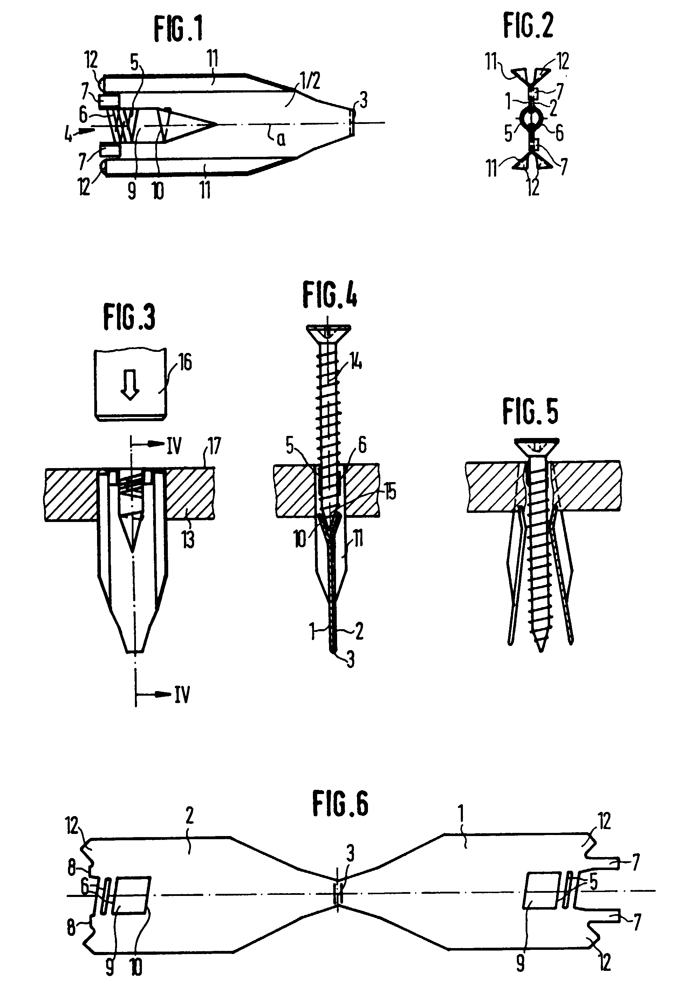

Wie aus der Platinendarstellung in Figur 6 ersichtlich, sind am Kopfende des einen Schenkels 1 beiderseits der Haltestege 5 Lappen oder Stege 7 angeformt. Diese werden nach dem Zusammenklappen der Spreizschenkel 1 und 2 in die Dübelform über die Abschlußkante 8 des anderen Schenkels 2 umgebogen und derart zusammengedrückt, daß die beiden Kopfenden der Schenkel 1 und 2 fest miteinander verbunden sind.

Zur Aussteifung der Spreizschenkel 1 und 2 sind an deren Längsseiten Rippen 11 angeformt, die bis ans Kopfende heranreichen und mit querstehenden Ansätzen 12 versehen sind. Diese dienen beim Eintreiben des Dübels in die Wandplatte 13 mittels eines Hammers 16 als Schlagfläche und dringen leicht in die Außenhaut 17 der Wandplatte 13 ein, so daß das Kopfende des Metalldübels mit der Oberfläche der Wandplatte 13 genau abschließt. Die Ansätze 12 von zwei benachbarten Rippen 11 sind hierbei zweckmäßigerweise zueinandergerichtet, so daß eine Verletzungsgefahr beim Hantieren mit den Dübeln auf jeden Fall ausgeschlossen ist.

## Patentansprüche

1. Metalldübel zur Verankerung in dünnen Wandplatten aus Gipskarton, Preßspan oder dergl. Baumaterial, der durch Zusammenklappen eines Stahlblechteils gebildet ist und aus zwei flach aneinandergepreßten Spreizschenkeln (1,2) besteht, welche am in die Platte eintreibbaren Ende spitz auslaufend ausgebildet und am entgegengesetzten Kopfende fest miteinander verbunden sind, wobei dieses Kopfende mit einem zwischen die Spreizschenkel (1,2) gerichteten Gewindebereich (4) zum Eindrehen von Holz- oder Blechschrauben versehen ist, dem eine Aussparung mit einer trichterförmigen Kantenausformung zum Einführen der Schraubenspitze nachgeordnet ist,
**dadurch gekennzeichnet,** daß die spitz auslaufenden Enden der Spreizschenkel (1, 2) durch einen dünnen Steg (3) abreißbar miteinander verbunden sind und der Gewindebereich (4) aus je zwei, aus dem Schenkelblech herausgestanzten, in die Gewinderillen der einzudrehenden Schraube (14) eingreifenden Haltestegen (5, 6) gebildet ist.

2. Metalldübel nach Anspruch 1, dadurch gekennzeichnet, daß die Kopfenden der beiden Schenkel (1, 2) durch Lappen (7) zusammengehalten werden, die am Kopfende des einen Schenkels (1) beiderseits des Gewindebereichs (4) angeformt sind und nach dem Zusammenklappen der Spreizschenkel (1, 2) über die Kante (8) des anderen Schenkels (2) umgebogen und zusammengedrückt werden.

3. Metalldübel nach Anspruch 1 oder 2, wobei an den Längsseiten der Spreizschenkel (1, 2) zu deren Aussteifung voneinander weggebogene Rippen (11) angeformt sind, dadurch gekennzeichnet, daß die Rippen (11) bis zum Kopfende heranreichen und mit querabstehenden Ansätzen (12) versehen sind.

4. Metalldübel nach Anspruch 3, dadurch gekennzeichnet, daß die Ansätze (12) benachbarter Rippen (11) zueinander gerichtet sind.

## Claims

1. A metal dowel for anchoring in thin wall panels of plasterboard, chipboard or the like building material, which is formed by folding together a steel sheet portion and which comprises two spreading legs (1, 2) which are pressed flat against each other and which are of a configuration terminating in a point at the end which is drivable into the panel and which are fixedly connected together at the opposite head end, wherein said head end is provided with a screwthread region (4) which is directed between the spreading legs (1, 2) for screwing in wood or self-tapping screws, the screwthread region being followed by an opening with a funnel-like outwardly shaped edge configuration for insertion of the screw tip, characterised in that the ends of the spreading legs (1, 2) which terminate in a point are connected together tearably by a thin web portion (3) and the screwthread region (4) is formed from two respective holding web portions (5, 6) which are stamped out of the leg sheet steel and which engage into the screwthread channels of the screw (14) to be screwed in.

2. A metal dowel according to claim 1 characterised in that the head ends of the two legs (1, 2) are held together by tongues (7) which are formed at the head end of the one leg (1) on both sides of the screwthread region (4) and which after the spreading legs (1, 2) have been folded together are bent over the edge (8) of the other leg (2) and pressed together.

3. A metal dowel according to claim 1 or claim 2 wherein ribs (11) which are bent away from each other are formed at the longitudinal sides of the spreading legs (1, 2) for stiffening same characterised in that the ribs (11) extend as far as the head end and are provided with transversely projecting lugs (12).

4. A metal dowel according to claim 3 characterised in that the lugs (12) of adjacent ribs (11) are directed towards each other.

## Revendications

1. Cheville en métal pour ancrage dans des panneaux muraux minces en placoplâtre, carton comprimé lustré ou autre matériau de construction du même genre, qui est formée en rabattant sur elle-même une pièce en tôle d'acier et qui se compose de deux pattes expansibles (1, 2) appliquées à plat l'une contre l'autre, qui s'amenuisent en forme de pointe au niveau de leur extrémité destinée à être enfoncée dans le panneau et qui sont solidement reliées ensemble au niveau de leur partie opposée formant tête, cette partie formant tête étant en l'occurrence munie d'une partie formant filetage (4), disposée entre les deux pattes expansibles (1, 2) pour le vissage de vis à bois ou Parker, qui est suivie d'un évidement avec profilage du bord en forme d'entonnoir pour l'introduction de la pointe de la vis, caractérisée en ce que les extrémités s'amenuisant en forme de pointe des pattes expansibles (1, 2) sont reliées par une mince barrette (3) avec la possibilité de se dissocier par rupture de celle-ci et en ce que la partie formant filetage 4 est constituée respectivement par deux barrettes de retenue (5, 6) réalisées par découpage à la presse dans la tôle des pattes, qui viennent s'engager en prise d'encastrement dans les fonds des filets de la vis à visser (14).

2. Cheville en métal selon la revendication 1, caractérisée en ce que les extrémités formant tête des deux pattes (1, 2) sont maintenues en position d'assemblage par des barrettes (7) qui sont réalisées solidaires par formage au niveau de l'extrémité formant tête d'une des pattes (1), de part et d'autre de la partie formant filetage (4) et qui, une fois les pattes expansibles (1, 2) rabattues l'une sur l'autre, sont repliées sur le bord (8) de l'autre patte (2) et comprimées sur celui-ci.

3. Cheville en métal selon la revendication 1 ou 2, dans laquelle des ailettes (11) repliées vers l'extérieur en opposition réciproque sont réalisées solidaires par formage des côtés longitudinaux des pattes expansibles (1, 2) pour renforcer leur rigidité, caractérisée en ce que les ailettes (11) se prolongent jusqu'au niveau de l'extrémité formant tête et sont munies de saillies à disposition transversale (12).

4. Cheville en métal selon la revendication 3, caractérisée en ce que les saillies (12) d'ailettes (11) voisines sont orientées l'une vers l'autre.
